# EUROPÄISCHE PATENTSCHRIFT

(11) **EP 0 998 200 B1**
(45) Veröffentlichungstag und Bekanntmachung des Hinweises auf die Patenterteilung: **18.12.2002**
(21) Anmeldenummer: 98936408.8
(22) Anmeldetag: 02.07.1998
(51) Int. Cl.: A01N 43/88, A01N 25/26

(54) **PFLANZENSCHUTZMITTEL-GRANULAT MIT KONTROLLIERTER WIRKSTOFFFREISETZUNG**
PLANT PROTECTION PRODUCTS IN THE FORM OF A GRANULATE WITH CONTROLLED RELEASE OF THE ACTIVE AGENT
AGENT DE PROTECTION PHYTOSANITAIRE SOUS FORME DE GRANULE A LIBERATION CONTROLEE DU PRINCIPE ACTIF

(30) Priorität: 23.07.1997 DE 19731528
(43) Veröffentlichungstag der Anmeldung: 10.05.2000
(73) Patentinhaber: BASF AKTIENGESELLSCHAFT, 67056 Ludwigshafen (DE)
(72) Erfinder: SCHROEDER, Manfred, D-67434 Neustadt (DE); KOBER, Reiner, D-67136 Fussgönheim (DE); STADLER, Reinhold, D-67489 Kirrweiler (DE); TIDOW, Jörn, D-68723 Schwetzingen (DE); SENDHOFF, Norbert, D-67269 Grünstadt (DE); PROBECK, Erich, D-67278 Bockenheim (DE)
(86) Internationale Anmeldenummer: EP9804095
(87) Internationale Veröffentlichungsnummer: WO99004634

(56) Entgegenhaltungen:
- WO-A-89/03811
- WO-A-93/13085
- US-A- 4 032 319
- US-A- 5 454 851

## Beschreibung

Die vorliegende Erfindung betrifft ein Pflanzenschutzmittel-Granulat auf der Basis des Wirkstoffs Tetrahydro-3,5-dimethyl-1,3,5-thiadiazin-2-thion.

Die US-A 2,838,389 beschreibt die Verwendung von Tetrahydro-3,5-dimethyl-1,3,5-thiadiazin-2-thion nach der Formel (I) mit der Kurzbezeichnung Dazomet als Mittel zur Bodenentseuchung in der Landwirtschaft und Gärtnerei.

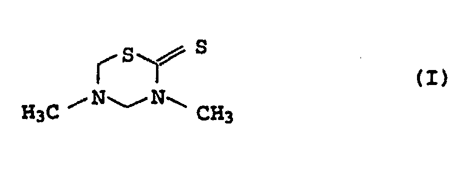

Für den Anwender, der mit mechanischen Methoden den Wirkstoff Dazomet in den Boden einarbeitet, ist es zunächst grundsätzlich vorteilhaft, staubfreie Granulate verwenden zu können.

Ein Verfahren zur Herstellung solcher weitgehend staubfreien Granulate wird in der EP A 618 912 beschrieben. Durch Zugabe von Alkylendiaminen der allgemeinen Formel R¹NH-A-NHR (III) (R und R¹ bedeuten unabhängig voneinander Wasserstoff oder C₁-C₄-Alkyl und A steht für eine 1,2-Ethylen, 1,3-Propylen oder 1,4-Butylen-Brücke) während der Herstellung von Dazomet wird die Kristallisation bzw. Granulatbildung gesteuert und es werden dadurch weitgehend staubfreie Dazomet-Granulate mit für den Anwender vorteilhaften Eigenschaften erhalten. Entsprechende Produkte sind unter dem Handelsnamen Basamid von BASF Aktiengesellschaft kommerziell erhältlich.

In Forest Prod. J. 43(2): 41-44 (1993), Acta Horticulture 382 (1995) S. 110 ff und Food and Fiber Science, 27(2) 1995, pp. 183-197 und dort genannten weiteren Literaturstellen wird die Verwendung von Dazomet-Granulaten und die Wirkungsweise des Freisetzungsprodukts Methyl-iso-thiocyanat

CH₃-N=C=S (II)

(MITC), welches als eigentliches biologisch wirksames Agens fungiert, beschrieben. Dazomet selbst kann demzufolge nur als sogenannte Prodrug-Vorstufe angesehen werden.

Über die Art und Aktivierung der MITC-Freisetzung im Boden aus Dazomet ist noch vergleichsweise wenig bekannt. Aus der Literatur kann man aber entnehmen, dass hier der Boden-pH, Übergangsmetalle oder z.B. die Bodenfeuchte und Bodentemperatur eine Rolle spielen. Dies wird durch eigene Untersuchungen bestätigt.

Die nach o.g. EP 0 618 912 hergestellten Dazomet-Granulate sind zwar weitgehend staubfrei, haben aber auf die Freisetzung von MITC nur einen sehr begrenzten Einfluß und können daher ein Anwendungsproblem nicht zur vollen Zufriedenheit lösen - die Steuerung der Wirkstoffreisetzung, insbesondere die Verzögerung derselben.

So hat sich beim Einsatz von entsprechendem Dazomet-Granulat gezeigt, daß bei hohen Bodentemperaturen über 30°C und ausreichender Bodenfeuchte die Freisetzung von MITC sehr schnell erfolgt und dann beim Einarbeiten der Granulate in den Boden, insbesondere bei der Gewächshausanwendung, MITC bei nicht sachgemäßer Lüftung und Anwendung zu temporären Schleimhaut und Augenreizungen führen kann.

Es wäre daher für die Anwendung wünschenswert, die Freisetzung von MITC ausreichend zu retardieren, um dem mit der Ausbringung beauftragten Personen ausreichend Zeit zu geben, vor der Wirkstoffreisetzung das Gewächshaus verlassen zu können.

Ein Alternativprodukt zur Bodenentseuchung, gasförmiges Methylbromid, hat Nachteile hinsichtlich seiner bekannten Ozonschädigung.

Metam-Fluid bzw. Metam-Natrium sind aufgrund ihrer sehr schnellen und hohen Gasentwicklungstendenz im Gewächshaus nur bedingt einsatzfähig oder wie z.B. in Kalifornien schon nicht mehr zugelassen.

Das "Montreal Protocol on Substances that deplete the Ozone Layer" in Part IV: Assessment of the Economic Viability of Methyl Bromide Alternatives, April 1997 Report Vol. II nennt auf Seite 260 die Verwendung von Dazomet als potentielle Alternative für Methylbromid, weist aber auf Probleme in der Anwendung durch ungeschulte Anwender hin.

Aufgabe der vorliegenden Erfindung war es daher, Pflanzenschutzmittel-Granulate auf der Basis des Wirkstoffs Tetrahydro-3,5-dimethyl-1,3,5-thiadiazin-2-thion zur Verfügung zu stellen, in denen die Freisetzung des aktiven Wirkstoffs verzögert und/oder kontrolliert erfolgt.

Diese Aufgabe wird erfindungsgemäß gelöst durch Pflanzenschutzmittelgranulate auf der Basis des Wirkstoffs Tetrahydro-3,5-dimethyl-1,3,5-thiadiazin-2-thion, wobei diese Granulate eine äußere Hülle enthalten, die 0,1 bis 50 Gew.% des Gesamtgewicht des Granulats ausmacht und die zu mindestens 50 Gew.% aus Schwefel besteht.

Bevorzugte Ausführungsformen der Erfindung sind den Unteransprüchen und der nachfolgenden Beschreibung zu entnehmen.

Weiterhin betrifft die Erfindung ein Verfahren zur Bekämpfung von Nematoden, im Boden lebenden Insekten, keimenden Pflanzen, Bodenbakterien und Bodenpilzen wobei man den Erdboden mit einer wirksamen Menge von 1 bis 1000 kg/ha Bodenfläche des erfindungsgemäßen Granulats behandelt.

Bevorzugt werden im Rahmen der Erfindung Dazomet-Granulate wie sie nach dem in der EP 618 912 beschriebenen Verfahren erhalten werden, d.h. Produkte, bei deren Herstellung 0,1 bis 10 Mol% Diaminoalkylenverbindungen R¹NH-A-NHR (R, R¹ und A haben die eingangs genannte Bedeutung) zugesetzt werden. Wegen näherer Details zur Herstellung sei hier auf die EP 618 912 verwiesen.

Vorzugsweise macht die äußere Hülle 1 bis 35 und insbesondere 2 bis 25 Gew.% des Granulats aus.

Die Hülle besteht vorzugsweise zu 55 bis 100, besonders bevorzugt 75 bis 100 Gew.% aus elementarem Schwefel.

Besonders bevorzugtes Hüllmaterial ist elementarer Schwefel, insbesondere solche Produkte, die in Form wäßriger Dispersionen eingesetzt werden können.

So wurde überraschend gefunden, daß wäßrige Schwefel-Dispersionen, z.B. wäßrige Redispersionskonzentrate des Handelsprodukte Kumulus® DF, als Hüllbestandteile besonders geeignet sind.

Von Vorteil ist bei der Verwendung solcher Hüllmaterialien, daß diese im Wirbelschichtverfahren auf die Dazomet-Granulate aufgebracht werden können, ohne dass Nachteile im Verarbeitungsprozeß wie Agglomeratbildungen, Grobkornbildungen oder Nachteile beim Abriebverhalten gefunden wurden.

Bevorzugt werden solche Schwefel-Dispersionen nach einem der folgenden Verfahren hergestellt:

### Verfahren A :

### Schwefel-Suspensionskonzentrate über wäßrige Vermahlungstechniken aus elementarem Schwefel mit geeigneten Hilfsmitteln

Elementarer Schwefel, z. B. Schwefelpulver, wird zweckmäßig unter Zugabe von Netz- und Dispergiermitteln sowie gegebenenfalls unter Zugabe eines Bindemittels, in Wasser suspendiert. Die noch grobteilige Schwefelsuspension wird dann vorzugsweise in Kugelmühlen oder Rührwerkskugelmühlen mit Mahlkörpern, beispielsweise Glasmahlkörpern oder anderen mineralischen oder metallischen Mahlkörpern mit einer Größe (mittlerer Durchmesser) von im allgemeinen 0,1 - 30 mm, vorzugsweise 0,6- 2 mm zerkleinert, bis die mittlere Partikelgröße vorzugsweise kleiner als 10 µm ist.

### Verfahren B:

### Schwefel-Suspensionskonzenztrate über in Wasser redispergierte Schwefel-Schmelzsprüngranulate

Schwefel-Schmelzsprühgranulate werden erhalten, indem man elementaren Schwefel, z. B. Schwefelpulver, durch Erhitzen auf Temperaturen von mehr als 120° C zum Schmelzen bringt und die erhaltenen Schmelze, gegebenenfalls nach Zugabe von Netzmitteln und Dispergiermitteln in einer geeigneten Sprühvorrichtung, z. B. in einem Sprühturm, unter Ausbildung des Schwefel-Sprühgranulats in der Regel unter Abkühlung versprüht.

Als Netz- und Dispergiermittel für beide Verfahren kommen z. B. die folgenden Hilfsmittel aus folgenden Stoffklassen in Betracht:
Fettsäure-Polyoxyethylenester wie Laurylalkohol-Polyoxyethylenetheracetat,
Alkyl-Polyoxyethylen- oder -Polyoxypropylenether z.B. von iso-Tridecyl-alkohol und Fettalkohol-Polyoxyethylenether,
Alkylarylalkohol-Polyoxyethylenether wie Octylphenol-Polyoxyethylenether oder Tributylphenol-Polyoxyethylenether,
ethoxyliertes iso-Octyl-, Octyl- oder Nonylphenol oder Rizinusöl, Sorbitester,
Arylsulfonsäuren, Alkylsulfonsäuren, Alkylschwefelsäuren oder deren Alkali-, Erdalkali- und Ammoniumsalze, insbesondere Salze von Arylsulfonsäuren, z. B. Lignin-, Phenol-, Naphthalin- und Dibutylnaphthalinsulfonsäuren, Alkylsulfonsäuren, Alkylarylsulfonsäuren, Alkyl-, Laurylether- und Fettalkoholschwefelsäuren, Fettsäuren, sulfatierte Hexa-, Hepta- und Octa-decanole und Fettalkoholglykolether,
Kondensationsprodukte von sulfoniertem Naphthalin und seiner Derivate mit Formaldehyd,
Kondensationsprodukte von Naphthalinsulfonsäuren mit Phenol und Formaldehyd und
Eiweißhydrolysate.

Daneben sind noch besonders geeignet Lignin-Sulfitablaugen und Methylcellulose.

### Beispielhaft seien hier erwähnt:

Benzolsulfonsäure und deren C₁₀-C₁₆-Alkylderivate sowie deren Natrium-, Kalium- Calcium- und Magnesiumsalze, Diisobutyl-, Diisopropyl und Dimethylnaphthalinsulfonsäure und deren entsprechende Natrium-, Kalium-, Calcium- oder Magnesiumsalze, bevorzugt die Natriumsalze, Ammonium- und Natriumsalze des Monoethers von ethoxyliertem Dodecanol mit Schwefelsäure, Monoether von ethoxyliertem Dodecylalkohol mit Schwefelsäure, verschiedene Salze von Dodecylsulfat (Na, K, Ca, Mg), Salze der Dodecylbenzolsulfonsäure mit Na, K, Ca, Triethanolamin oder Triethylamin, Ammonium- oder Natriumsalze von Kondensaten aus Naphthalinsulfonsäure und Formaldehyd, Kondensate aus Phenolsulfonsäure, Harnstoff und Formaldehyd und deren Salze, Xyloylsulfonsäure und deren Salze sowie Natriumsalze von C₁₂-C₁₆ 2-Alkensulfonsäuren

Die erfindungsgemäßen Granulate werden vorzugsweise in einer Wirbelschichtanlage hergestellt. Dazu werden zunächst die Dazomet-Granulate fluidisiert und gleichzeitig eine in der Regel wäßrige Schwefeldispersion (für den Fall der Verwendung solcher Dispersionen als Hüllmaterialien) ggf. zusammen mit weiteren Hilfsmitteln, wie Polymeren, Netz- oder Dispergiermitteln, Emulgatoren oder Bindemitteln auf die Wirkstoff-Granulate aufgesprüht.

Als Hilfsmittel und Hüllmaterialien, die in Mischungen gemeinsam oder getrennt mit Schwefel-Dispersionen auf die Dazomet-Granulate aufgesprüht werden kommen insbesondere folgende Bindemittel in Betracht:
Cellulose-Derivate wie Celluloseester, Celluloseether, Carboxymethyl-cellulose, Hydroxypropylmethylcellulose, wasserlösliche Gummen wie Gummi arabicum, Gummi tragacantha, Alginate, Gelatine, modifizierte Stärken wie Na-Carboxymethyl-stärke, als Hilfsmittel aus natürlichen Quellen bzw. ferner Cellulose, Celluloseacetate, Cellulosecarboxymethylether und dessen Na-Salz, Cellulose-2-hydroxypropyl- bzw. Cellulose-2-hydroxyethyleether, Celluloseethylether, regenerierte Cellulose, um nur einige zu nennen.

Die Hülle der erfindungsgemäßen Granulate besteht zu mindestens 50, vorzugsweise 55 bis 100 Gew.% aus Schwefel. Zur Steuerung der Eigenschaften der Hülle, insbesondere der Kontrolle der MITC-Freisetzung können neben Schwefel z.B. polymere Hüllstoffe in einer Menge von bis zu 45, vorzugsweise bis zu 40 Gew.%, bezogen auf die Hülle, mitverwendet werden.

Bevorzugt werden wäßrige Wachsdispersionen eingesetzt, enthaltend, bezogen auf die wäßrige Wachsdispersion, 5 bis 40 Gew.-% eines Ethylencopolymerisatwachses, bestehend aus 10 bis 25 Gew.-% einer a-olefinisch ungesättigten Mono- oder Dicarbonsäure mit 3 bis 8 C-Atomen und 90 bis 75 Gew.-% Ethylen mit einem MFI-Wert. gemessen bei 190 °C und 2,16 kp Belastung, von 1 bis 600, bevorzugt 5 bis 500, insbesondere 15 bis 300 oder einem MFI-Wert, gemessen bei 160 °C und 325 p, von 1 bis 600, 0.1 bis 5 Gew.-% Alkalihydroxid, Ammoniak, ein Alkanolamin oder ein Dialkanolamin und ihre Mischungen und als Rest Wasser zu 100 %.

Die für Wachsdispersionen besonders geeigneten Copolymerisate des Ethylens enthalten 10 bis 25, bevorzugt 15 bis 24 Gew.-% a-olefinisch ungesättigte Mono- oder Dicarbonsäuren mit 3 bis 8 C-Atomen, von denen beispielsweise Acrylsäure, Methacrylsäure, Crotonsäure, Maleinsäure, Fumarsäure und Itaconsäure genannt seien. Davon sind Methacrylsäure und insbesondere Acrylsäure und ihre Mischungen bevorzugt.

Die Ethylen-Copolymerisatwachse sind charakterisiert durch ihren MFI (Melt Flow Index) oder Schmelzindex. Der MFI gibt die Menge der Polymerisatschmelze in Gramm an, die bei einer bestimmten Temperatur durch eine Düse von bestimmten Abmessungen bei einem bestimmten Kraftaufwand (Belastung) gedrückt werden kann. Die Bestimmung der Schmelzindices (MFI-Einheiten) erfolgt nach folgenden Normvorschriften, ASTM D 1238-65 T, ISO R 1133-1696 (E) oder DIN 53 735 (1970).

Weiterhin enthalten die Wachsdispersionen bevorzugt Basen, und zwar in der Regel 0.1 - 5, bevorzugt 1 bis 3 Gew.-% Alkalihydroxid, bevorzugt Kaliumhydroxid oder Natriumhydroxid, Ammoniak, ein Mono-, Di- oder Trialkanolamin mit jeweils 2 bis 18 C-Atomen im Hydroxyalkylrest, bevorzugt 2 bis 6 C-Atomen, oder Mischungen der genannten Alkanolamine oder ein Dialkyl-monoalkanolamin mit jeweils 2 bis 8 C-Atomen im Alkyl- und Hydroxyalkylrest oder ihre Mischungen. Als Amine seien beispielsweise genannt Diethanolamin, Triethanolamin, 2-Amino-2-methylpropanol-(1) oder Dimethylethanolamin. Vorzugsweise wird Ammoniak verwendet.

Durch den Baseanteil in den Wachsdispersionen liegen die Carbonsäuregruppen in den Copolymerisatwachsen zumindest teilweise in der Salzform vor. Vorzugsweise sind diese Gruppen zu 50 bis 90 und vor allem bis zu 60 bis 85 % neutralisiert.

Besonders bevorzugt ist eine Wachsdispersion, welche 5 bis 40 Gew.-% eines Ethylen-Copolymerisatwachses, 0.1 bis 5 Gew.-% Ammoniak und 55 bis 94.9 Gew.-% Wasser enthält bzw. aus diesen Komponenten besteht, wobei das Ethylen-Copolymerisatwachs aus 75 bis 90 Gew.-% Ethyleneinheiten und zu 10 bis 25 Gew.-% aus Einheiten einer a-olefinisch ungesättigten Mono- oder Dicarbonsäure mit 3 bis 8 C-Atomen aufgebaut ist.

Beispielhaft seien als geeignete polymere Hüllmaterialen noch die folgenden genannt:
Copolymere aus Butylacrylat, 2-Hydroxyethyl methacrylate, Methacrylicsäure und Styrol,
Copolymere aus Butylacrylat, 2-Hydroxyethyl methacrylate, Methylmethacrylat und Styrol,
Copolymere aus Butylacrylat, Butylmethacrylat, Methacrylsäure und Styrol,
Copolymere aus Butylacrylat, Hydroxyethylacrylate und Methylmethacrylat,
Copolymere aus Butylmethacrylat, 2-Ethylhexylacrylat and Styrol,
Copolymere aus Butylmethacrylat, 2-Hydroxyethylmethacrylat, Methylmethacrylat und Styrol,
Copolymere aus n-Butylmethacrylat, 2-Hydroxyethylmethacrylat, Methylmethacrylat und Styrol,
Ethylen-Vinylacetat-Copolymere,
Na- und NH₄-Salze von Ethylen-Acrylsäure-Copolymerisaten.
Copolymerisate aus Methylmethacrylat und Acrylsäure, Butylacrylat. Butylmethacrylat oder deren Mischungen,
Polyvinylacetat, Polyvinylether, Polyacrylamide, Polyamide, Polyvinylalkohol, Polyvinylpyrrolidon,Polyvinylpyrrolidon-Vinylacetat-Copolymere,
Copolymerisate des Vinylacetats mit Methylacrylat, Methylmethacrylat, Butylacrylat und Acrylsäure oder deren Mischungen,
Copolymerisate von Vinylpyrrolidonen mit langkettigen 1-Alkenen sowie Copolymerisate aus Crotonsäure, Vinylacetat und Vinylpropionat.

Die Hüllschicht kann auch Substanzen zur Steuerung der Freisetzung der Wirkstoffe enthalten. Dies sind z. B. wasserlösliche Substanzen wie Polyethylenglykole, Polyvinylpyrrolidon und Copolymerisate aus Polyvinylpyrrolidon und Polyvinylacetat. Deren Menge beträgt beispielsweise 0.1 bis 5 Gew.-%, vorzugsweise 0.1 bis 3 Gew.-% bezogen auf die Hüllsubstanz.

Die vorstehend beschriebenen Hüllpolymere sind allgemein bekannt oder nach bekannten Methoden erhältlich (vgl. z. B. DE-A 34 20 168; EP-A 201 702; US-A 206 279).

Das Aufbringen solcher Hüllschichten erfolgt zweckmäßig durch Aufsprühen von Lösungen, Dispersionen oder Dispersion der genannten Hüllsubstanzen zusammen mit dem Schwefel in organischen Lösungsmitteln oder Wasser.

Vorzugsweise verwendet man eine wäßrige Suspension oder eine Emulsion des Hüllstoffs, welche insbesondere einen Gehalt an Polymersubstanz von 0.1 bis 50 und vor allem von 1 bis 35 Gew.-% aufweisen. Dabei können noch weitere Hilfsstoffe zur Optimierung der Verarbeitbarkeit zugesetzt sein, z. B. oberflächenaktive Substanzen, Feststoffe wie Talkum und/oder Magnesiumstearat.

Die vorstehend beschriebenen Wachs-Dispersionen können auch gemeinsam mit Schwefel-dispersionen und/oder anderen Hilfsmitteln auf die Dazomet Granulate im Wirbelschichtverfahren aufgesprüht werden.

Bei den erfindungsgemäß mit einer äußeren Hülle versehenen Granulaten beginnt die Freisetzung von MITC im Vergleich zu den handelsüblichen Produkten insbesondere bei hohen Temperaturen mit deutlicher Verzögerung, ohne daß die Abklingphase nach der Behandlung signifikant verlängert wird, d.h. die MITC-Mineralisierung, die erforderlich ist, bevor mit der Wiedereinsaat begonnen werden kann, erfolgt praktisch im gleichen Zeitraum wie bei den bekannten Produkten. Dies stellt einen wesentlichen anwendungstechnischen Vorteil dar.

Die erfindungsgemäßen Pflanzenschutzmittelgranulate können noch andere Wirkstoffe enthalten bzw. mit anderen Mitteln zusammen gemeinsam, gemischt oder getrennt nacheinander aufgebracht werden. Der Anteil der weiteren Wirkstoffe beträgt vorzugsweise bis zu 20, insbesondere bis zu 10 Gew.%, bezogen auf das Gesamtgewicht. Geeignete weitere Mittel sind dem Fachmann an sich bekannt und in der Literatur beschrieben, so daß sich hier nähere Angaben erübrigen.

### Beispiele

### Beispiel 1 : Herstellung eines Schwefel-Schmelzsprühgranulates mit anschließender Redispergierung in Wasser

Schwefelpulver wurde auf eine Temperatur oberhalb von 120° C erhitzt und geschmolzen. Die Schmelze wurde mit ligninsulfonsaurem Natrium als Netzmittel und Kieselsäure als Dispergiermittel vermischt. Das Schmelzgemisch wurde mit einer Zweistoffdüse in einem Sprühturm versprüht. Es entstand ein leicht dispergierbares Sprühgranulat (Partikeldurchmesser: 60<x<300 µm), das 0,3 Gew.-% Dispergiermittel und ca. 20 Gew.-% Netzmittel enthielt. Der Rest war Schwefel.
Das erhaltene Schmelzsprühgranulat wurde dann anschließend in der gleichen Menge an Wasser dispergiert und anschließend gemäß Beispiel 3 weiterverarbeitet.

### Beispiel 2: Herstellung einer Schwefel-Suspension über wäßrig-mechanische Feinvermahlung in Rührwerksmühlen

Schwefelpulver wurde in Wasser suspendiert und Natriumligninsulfonat als Dispergiermittel zugegeben. Als Netzmittel wurde des weiteren Nonylphenol-polyethoxilat zugegeben. Die Suspension wurde auf eine pumpfähige Konzentration eingestellt; zweckmäßig war eine Schwefel-Konzentration von 50 Gew.-%.

Der Ansatz wurde in einer Laborrührwerksmühle zu einer sprühfähigen Suspension vermahlen, bis eine Kornverteilung von 40 % < 2micrometer erreicht war.

Bezogen auf die gesamte Trockenmasse hatte der Schwefel einen Anteil von 80 Gew.-%, das Natriumligninsulfonat im Beispiel eine Konzentration von 19 Gew.-% und das Netzmittel von 1 Gew.-%. Die Zugabe eines Antischaummittels, z. B. Silikon SRE in einer Konzentration von bis zu 0,1 % unterdrückte die Schaumbildung bei der Mahlung.

### Beispiel 3: Herstellung der erfindungsgemäßen Dazomet-Granulate

2 kg eines gemäß EP 0 618 912 hergestelltes Granulats wurde in einer Sprühwirbelschicht vorgelegt.

Auf dieses sogenannte Trägergranulat wurde dann eine 50%ige wäßrige Suspension von Schwefel binnen 20 min. aufgesprüht. Das Dazomet-Granulat wurde dabei mit einer Luftmenge von 130 m³/h fluidisiert. Die wäßrige Schwefel-Suspension wurde mit einem Sprühdruck von 1,5 bar aufgesprüht.

Nach dem vorstehend beschriebenen Verfahren wurden folgende Proben hergestellt:

**Tabelle 1**

| Probe Nr. | Gew-Anteil der äußeren Hülle und deren Zusammensetzung |
|---|---|
| 1 | ohne Hülle (Vergleichsprobe) |
| 2 | 10 % eines S-Granulats gemäß Bsp. 3 |
| 3 | 20 % eines S-Granulats gemäß Bsp. 3 |
| 4 | 10 % eines S-Granulats gemäß Bsp. 3 + 5 % Polymer 1 |
| 5 | 5 % eines S-Granulats gemäß Bsp. 3 + 5 % Polymer 2 |

Bei dem in Probe eingesetzten Polymer 1 handelt es sich um eine Wachsdispersion gemäß Beispiel 1 der EP 734,205; das in Probe 5 eingesetzte Polymer 2 war ein Na-Salz eines Phenolsulfonsäure/Formaldehyd/Harnstoffkondensats.

Die MITC-Freisetzung wurde nach folgendem Verfahren bestimmt:

400 g getrockneter und klumpenfreier Erboden (pH 7,9 - Standort Limburgerhof) wurden mit 160 mg der Proben 1 bis 5 intensiv gemischt, mit 50 ml Wasser angefeuchtet und in ein Versuchsgefäß (Glas, Innendurchm. 100mm, Gasraum 300 ml) eingefüllt, dieses verschlossen und in einen Klimaschrank gestellt. Das Gefäß wurde mit 10 ml/min gereinigter Luft durchströmt. Diese wurde nach dem Verlassen des Gefäßes mittels einer beheizten Verbindungsleitung direkt in den Flammenionisationsdetektor (FID) eines Gaschromatographen geleitet. Das Signal des Detektors entspricht praktisch zu 100% dem org.-C-Anteil des Meßgases. Neben Methylisothiocyanat findet man allgemein beim Dazomet-Abbau praktisch keine weiteren, mit dem FID detektierbaren Verbindungen bzw. flüchtigen Gase. Die Kalibrierung erfolgte mit Hilfe eines Kalibriergases (Propan in Stickstoff) unter Berücksichtigung eines stoff spezifischen Korrekturfaktors.

Die Ergebnisse der Versuche sind in der nachfolgenden Tabelle 2 dargestellt.

**Tabelle 2**

| | Probe 1 | Probe 1 | Probe 1 | Probe 2 | Probe 3 | Probe 4 | Probe 5 |
|---|---|---|---|---|---|---|---|
| Meßdauer in h | Konz. MITC mg/m³ | Konz. MITC mg/m³ | Konz. MITC mg/m³ | Konz. MITC mg/m³ | Konz. MITC mg/m³ | Konz. MITC mg/m³ | Konz. MITC mg/m³ |
| 0,5 | 110 | 361 | 550 | 220 | 110 | 110 | 220 |
| 1 | 220 | 723 | 1210 | 660 | 440 | 165 | 770 |
| 2 | 303 | 1627 | 3080 | 1980 | 1870 | 440 | 2420 |
| 6 | 743 | 3795 | 803.0 | 4620 | 5060 | 1705 | 5940 |
| 12 | 1320 | 4389 | 5280 | 3740 | 4070 | 2585 | 4620 |
| 18 | 1678 | 3589 | 3080 | 2640 | 2640 | 2585 | 2915 |
| 24 | 1859 | 2556 | 1760 | 1760 | 1650 | 2145 | 1815 |
| Temp./ °C | 15 | 25 | 35 | 35 | 35 | 35 | 35 |

Die Ergebnisse der durchgeführten Versuche zeigen, daß in allen Fällen bei 35°C durch die Umhüllung eine deutlich verzögerte MITC-Freisetzung ereicht wird. Die Freisetzungsrate entspricht etwa der des Granulats ohne Hülle bei 15°C. Vorteilhaft und überraschend, insbesondere bei Probe 4, ist, daß nach erfolgter Einarbeitung nach 6 h - dies entspricht etwa einer Anwendung in der Praxis - wieder eine höhere Freisetzungsrate erhalten wird als beim nicht umhüllten Granulat bei 15 °C. Dies ist ein wünschenswerter Effekt, da dadurch trotz verzögerter anfänglicher Freisetzung eine schnellere MITC-Abklingrate erzielt wird und somit ein früherer Wiedereinsaattermin bei Neuanpflanzungen möglich ist.

Ein weiterer positiver Effekt ist, daß bei den Aufwandmengen der Dazomet-Granulate die vorzugsweise im Bereich von 1 bis 1000 kg/ha, besonders bevorzugt 10 bis 800 und insbesondere 100 bis 600 kg/ha Bodenfläche liegen, signifikante Mengen Schwefel in den Boden eingebracht werden, die durch Düngeeffekte langfristig dem Pflanzenwachstum zugute kommen.

Darüber hinaus ist durch den Schwefel noch eine zusätzliche fungizide, nematizide oder insektizide Wirkung zu erwarten.

## Patentansprüche

1. Pflanzenschutzmittelgranulate auf der Basis des Wirkstoffs Tetrahydro-3,5-dimethyl-1,3,5-thadiazin-2-thion, enthaltend eine äußere Hülle mit einem Gewichtsanteil von 0,1 bis 50 Gew.%, bezogen auf das Granulat, die zu mindestens 50 Gew.% aus Schwefel besteht.

2. Pflanzenschutzmittelgranulate nach Anspruch 1, **dadurch gekennzeichnet, daß** als Material für die äußere Hülle von Schwefel in Form eines Suspensionskonzentrats ausgegangen wird.

3. Pflanzenschutzmittelgranulat nach Anspruch 1 oder 2, **dadurch gekennzeichnet, daß** der enthaltene Wirkstoff unter Zusatz von 0,1 bis 10 mol% an Diaminoalkylenverbindungen der Formel III
R¹NH-A-NHR
hergestellt wurde, wobei R und R¹ unabhängig voneinander Wasserstoff oder eine C₁-C₄-Alkylgruppe darstellen und A für eine 1,2-Ethylen-, 1,3-Propylen- oder 1,4-Butylenbrücke steht.

4. Verfahren zur Bekämpfung von Nematoden, im Boden lebenden Insekten, keimenden Pflanzen, Bodenbakterien und Bodenpilzen, **dadurch gekennzeichnet, daß** man den Erdboden mit einer Menge von 1 bis 1000 kg/ha Bodenfläche des Pflanzenschutzmittelgranulats nach einem der Ansprüche 1 bis 3 behandelt.

5. Verwendung der Pflanzenschutzmittelgranulate gemäß einem der Ansprüche 1 bis 3 als Bodenentseuchungsmittel.

6. Verfahren zur Herstellung von Pflanzenschutznittelgranulaten gemäß einem der Ansprüche 1 bis 3, **dadurch gekennzeichnet, daß** man ein Granulat des Wirkstoffs Tetrahydro-3,5-dimethyl-1,3,5-thadiazin-2-thion in einem Wirbelschichtverfahren fluidisiert und mit einer wäßrigen Suspension des Hüllmaterials beschichtet.

## Claims

1. Crop protection granules based on the active substance tetrahydro-3,5-dimethyl-1,3,5-thiadiazine-2-thione and comprising an outer shell having a proportion by weight of from 0.1 to 50% by weight, based on the granules, of which at least 50% by weight consists of sulfur.

2. Crop protection granules as claimed in claim 1, wherein sulfur in the form of a suspension concentrate is the starting material for the outer shell.

3. Crop protection granules as claimed in claim 1 or 2, wherein the active substance present has been prepared with the addition of from 0.1 to 10 mol% of diaminoalkylene compounds of formula III
R¹NH-A-NHR (III)
where R and R¹ independently are hydrogen or a C₁-C₄-alkyl group and A is a 1,2-ethylene, 1,3-propylene or 1,4-butylene bridge.

4. A method of controlling nematodes, soil-dwelling insects, germinating plants, soil bacteria and soil fungi, which comprises treating the soil with an amount of from 1 to 1000 kg/ha of soil surface of the crop protection granules as claimed in any of claims 1 to 3.

5. The use of soil protection granules as claimed in any of claims 1 to 3 as a soil decontaminant.

6. A process for preparing crop protection granules as claimed in any of claims 1 to 3, which comprises fluidizing granules of the active substance tetrahydro-3,5-dimethyl-1,3,5-thiadiazine-2-thione by a fluidized bed technique arid coating them with an aqueous suspension of the shell material.

## Revendications

1. Agents de protection phytosanitaire sous forme de granulés, à base de la substance active tétrahydro-3,5-diméthyl-1,3,5-thiadiazine-2-thione, contenant une enveloppe externe ayant une proportion en poids de 0,1 à 50 % en poids, par rapport au granulé, qui consiste pour au moins 50 % en poids en soufre.

2. Agents de protection phytosanitaire sous forme de granulés selon la revendication 1, **caractérisés par le fait que**, pour la matière pour l'enveloppe externe on part de soufre sous la forme d'un concentré en suspension.

3. Agent de protection phytosanitaire sous forme de granulé selon la revendication 1 ou 2, **caractérisé par le fait que** la substance active contenue a été préparée avec addition de 0,1 à 10 % en mol de composés de diaminoalkylène de formule III
R¹NH-A-NHR
tandis que R et R¹ représentent, indépendamment l'un de l'autre, l'hydrogène ou un groupe alkyle en C₁-C₄ et A désigne un pont 1,2-éthylène, 1,3-propylène ou 1,4-butylène.

4. Procédé pour la lutte contre les nématodes, les insectes vivant dans le sol, les plantes germantes, les bactéries du sol et les champignons du sol, **caractérisé par le fait qu'**on traite le sol avec une quantité de 1 à 1000 kg/ha de surface du sol d'agent de protection phytosanitaire sous forme de granulé selon l'une des revendications 1 à 3.

5. Utilisation des agents de protection phytosanitaire sous forme de granulés selon l'une des revendications 1 à 3 comme agents pour la désinfection des sols.

6. Procédé pour la préparation d'agents de protection phytosanitaires sous forme de granulés selon l'une des revendications 1 à 3, **caractérisé par le fait qu'**on fluidise un granulé de la substance active tétrahydro-3,5-diméthyl-1,3,5-thiadiazine-2-thione dans un procédé en lit fluidisé et on enrobe avec une suspension aqueuse de la matière d'enveloppe.
